Europäisches Patentamt

European Patent Office

Office européen des brevets

(11) Veröffentlichungsnummer: **0 166 203**
**B1**

## EUROPÄISCHE PATENTSCHRIFT

(45) Veröffentlichungstag der Patentschrift:
06.09.89

(51) Int. Cl.⁴: **E 03 C 1/04**

(21) Anmeldenummer: 85106276.0

(22) Anmeldetag: 22.05.85

(54) Armatur für das Gas- und/oder Flüssigkeitsrohrnetz.

(30) Priorität: 26.05.84 DE 3419826

(43) Veröffentlichungstag der Anmeldung:
02.01.86 Patentblatt 86/1

(45) Bekanntmachung des Hinweises auf die Patenterteilung:
06.09.89 Patentblatt 89/36

(84) Benannte Vertragsstaaten:
AT BE CH FR GB IT LI LU NL SE

(56) Entgegenhaltungen:
CS-A- 4 434 811
DE-A- 3 202 429
GB-A- 2 077 379
US-A- 3 891 251

(73) Patentinhaber: H.W. Kuntze Inhaber Günter Höfels,
Bersonstrasse 13, D-4300 Essen 1 (DE)

(72) Erfinder: Hüsselmann, Wilhelm, Gathestrasse 13,
D-4330 Mülheim/Ruhr (DE)

(74) Vertreter: Spalthoff, Adolf, Dipl.-Ing.,
Pelmanstrasse 31 Postfach 34 02 20,
D-4300 Essen 1 (DE)

ACTORUM AG

## Beschreibung

Die Erfindung betrifft eine Armatur für das Gas- und/oder Flüssigkeitsrohrnetz, welche mit einer oder mehreren Steck-Schraubverbindungen ausgerüstet ist, wobei die Steck-Schraubverbindung aus einem Einsteckteil und einem Aufnahmeteil besteht, das Einsteckteil einen über dessen Grundkörper radial vorragenden, ringförmigen Abschnitt aufweist, auf dem sich eine Überwurfgewindemutter abstützt, und das Aufnahmeteil einen im wesentlichen hohlzylindrischen Grundkörper besitzt, dessen die Einsrecköffnung aufweisender erster Abschnitt mit Außengewinde ausgerüstet ist, welches dem Innengewinde der Überwurfgewindemutter zugeordnet ist, wobei ferner sich an den ringförmigen Abschnitt des Einsteckteils in Richtung des offenen Endes der Überwurfgewindemutter ein sich konisch verjüngender Abschnitt anschließt, der eine Ringnut aufweist, in die ein O-Ring eingelegt ist, wobei schließlich die innere Umfangsfläche des ersten Abschnitts des Grundkörpers des Aufnahmeteils sich konisch verjüngend ausgeführt ist und dem konischen Abschnitt des Einsteckteils zugeordnet ist.

Eine derartige Armatur ist bekannt, durch die DE-A-3 202 429. Die durch diese Literaturstelle bekannte Schraubverbindung für Rohrarmaturen weist ein Rohrstück mit einer Dichtfläche an seinem verbindungsseitigen Ende auf. Der hintere Teil der Dichtfläche bildet einen Haltekragen für eine Überwurfmutter. Das damit zu verbindende Rohr besitzt an seinem Ende ein Außengewinde zum Verschrauben mit der Überwurfmutter. Das Außengewinde befindet sich am Ende einer Armatur, die an ihrem anderen Ende eine zylindrische Innenfläche zur Fixierung mit der Außenfläche des Endes an dem zu verbindenden Rohr aufweist. Das andere Ende des Rohrstückes besitzt für die Überwurfmutter einen weiteren Haltekragen, der aus einem rohrförmigen Paßstück besteht, das das Rohrstück an seinem Ende umfaßt und gegenüber diesem an der radialen Berührungsfläche fixiert ist. Eine Nut mit einem O-förmigen Dichtring befindet sich im Bereich der Dichtfläche, die mit einem Winkel von beispielsweise 24 Grad gegenüber der Rohrachse des Rohrstücks kegelförmig geneigt ist.

Von diesem Stand der Technik ausgehend, liegt der Erfindung die Aufgabe zugrunde, eine Armatur für Gas- und/oder Flüssigkeits-Rohrleitungsnetze der eingangs genannten Art zu schaffen, welche nicht nur in einfacher Weise zu montieren sowie zu demontieren ist, sondern darüber hinaus, eine nachträgliche Einstellbarkeit ermöglicht, bei gleichzeitiger Gewährleistung eines dauerhaften hohen Dichtheitsgrades.

Erfindungsgemäß wird dies dadurch erreicht, daß sich an den ersten sich konisch verjüngenden Abschnitt des Grundkörpers des Aufnahmeteils ein hohlzylindrischer zweiter Abschnitt und an den konisch sich verjüngenden Abschnitt des Absteckteils sich ein zylindrischer Abschnitt anschließen, welch letzterer eine Ringnut aufweist, in die ein O-Ring eingelegt ist und dessen äußere Umfangsfläche der inneren Umfangsfläche des hohlzylindrischen zweiten Abschnitts des Aufnahmeteils zugeordnet ist. Diese Steck-Schraubverbindung ergibt durch die einander zugeordneten Konusflächen sowie der zylindrischen Mantelflächen in Verbindung mit den Dichtringen eine hohe Dichtheit, wobei der Einsteckteil gegenüber dem Anschlußteil bzw. umgekehrt in jede beliebige Winkelstellung verdreht werden kann, woraufhin durch Festschrauben der Überwurfgewindemutter die für eine hohe Dichtheit erforderliche Verspannung der beiden Teile miteinander bewirkt wird. Das Lösen erfolgt in umgekehrter Weise.

Das Einsteckteil kann den Anschlußstutzen eines Ventils und das Aufnahmeteil die Anschlußmuffe eines Rohres bilden, so daß durch die erfindungsgemäße Steck-Schraubverbindung ein schnelles und sicheres Verbinden eines Ventils mit einer Rohrleitung möglich ist. Es ist jedoch auch möglich, daß das Aufnahmeteil den Anschlußstutzen eines Ventils für einen Rohrabgang und das Einsteckteil die Anschlußmuffe eines Rohres bilden, so daß Rohrleitungen in gleicher Weise an einen oder mehrere Abgänge des Ventils anschließbar sind.

Zum dichten Einsetzen der Absperrorgane in die Gehäuse von Ventilen, Schiebern usw. ist die Anordnung so getroffen, daß das Einsteckteil mit dem Absperrorgan eines Ventils ausgerüstet ist, und das Aufnahmeteil in das Ventilgehäuse integriert ist. In gleicher Weise kann auch das Gehäuse einer Ventilanbohrschelle ausgeführt sein.

Zur Verbindung von Rohren miteinander wird vorgeschlagen, daß das Einsteckteil und das Aufnahmeteil an den Enden der miteinander zu verbindenden Rohre befestigt sind.

Vorteilhaft ist die Überwurfmutter geteilt ausgeführt und weist im Teilungsbereich Flansche auf, welche mit einer Schraubverbindung ausgerüstet sind, so daß nach Aufschrauben der Überwurfgewindemutter diese zusätzlich durch die Schraubverbindung gesichert werden kann.

Die erfindungsgemäße Sicherheits-Steck-Schraubverbindung ermöglicht eine schnelle Montage bzw. Demontage von Armaturen in Rohrleitungsnetzen, bei beliebiger Winkelstellung derselben in bezug auf die Rohrleitungen sowie in gleicher Weise eine Verbindung der Absperr- oder Drosselorgane mit den zugehörigen Gehäusen und darüber hinaus eine Kupplung der Enden von aneinander anzuschliessenden Rohren.

Ausführungsbeispiele der Erfindung sind an Hand der Zeichnung näher erläutert, und zwar zeigt:

Figur 1 eine geschnittene Ansicht eines Ventils,
Figur 2 eine teilweise geschnittene Ansicht des Gehäuses einer Ventilanbohrschelle und
Figur 3 eine geschnittene Ansicht einer Rohrverbindung.

Mit 1 ist das Einsteckteil und mit 2 das Aufnahmeteil der Steck-Schraubverbindung bezeichnet.

Das Einsteckteil 1 weist einen über dessen Grundkörper 3 radial vorragenden, ringförmigen Abschnitt 4 auf. Auf dem ringförmigen Abschnitt 4 stützt sich die Überwurfgewindemutter 5 ab. An den ringförmigen Abschnitt 4 schließt sich in Richtung des offenen Endes der Überwurfgewindemutter 4 ein sich konisch verjüngender Abschnitt 6 an, der in einen zylindrischen Abschnitt 7 übergeht. Der konische 6 und der zylindrische Abschnitt 7 sind mit Ringnuten 8 versehen, in die O-Ringe 9 eingelegt sind.

Das zugehörige Aufnahmeteil 2 besitzt einen im wesentlichen hohlzylindrischen Grundkörper 10, dessen die Einstecköffnung aufweisender erster Abschnitt 11 mit Außengewinde 12 ausgerüstet ist, welches dem Innengewinde 13 der Überwurfgewindemutter 5 zugeordnet ist und dessen innere Umfläche 14 sich konisch verjüngend ausgeführt und dem konischen Abschnitt 6 des Einsteckteils 1 zugeordnet ist.

An den ersten Abschnitt 11 schließt sich ein hohlzylindrischer zweiter Abschnitt 15 an, dessen innere Umfläche 16 der äusseren Umfläche des zylindrischen Abschnitts 7 des Einsteckteils zugeordnet ist.

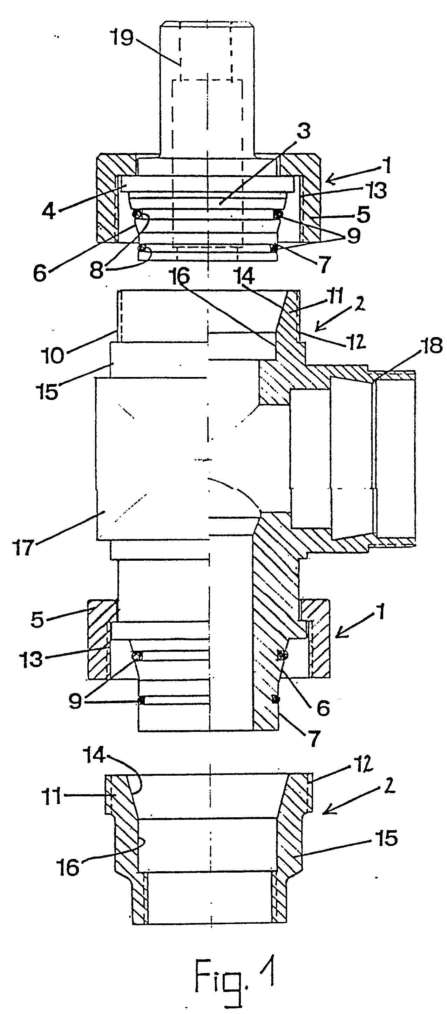

In den Anwendungsfällen gemäß Figur 1 bildet das Einsteckteil 1 den Anschlußstutzen eines Ventils 17 und das Aufnahmeteil 2 die Anschlußmuffe eines nicht weiter dargestellten Rohres. Es ist auch möglich, daß das Aufnahmeteil 2 den Anschlußstutzen 18 des Ventils ersetzt, so daß eine nicht weiter dargestellte Rohrleitung an diesen mit der Steck-Schraubverbindung anschließbar ist.

Im oberen Teil der Figur 1 ist gezeigt, daß das Einsteckteil 1 mit dem aus Gründen einer besseren Übersichtlichkeit nicht dargestellten Absperrorgan des Ventils 17 ausgerüstet ist, dessen Betätigungsvierkant 19 nach außen vorragt. Das Aufnahmeteil 2 ist in das Ventilgehäuse integriert, so daß das Absperrorgan des Ventils 17 über das Einsteckteil in diesem befestigbar ist.

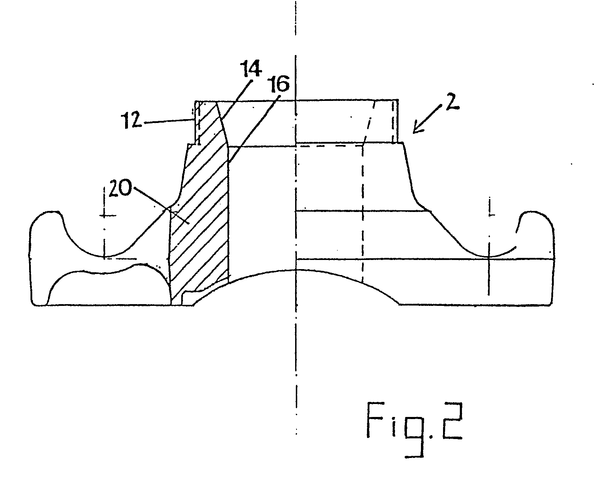

Bei der Ausführung nach Figur 2 ist das Aufnahmeteil 2 in das Gehäuse 20 einer Ventilanbohrschelle integriert, so daß der Ventilkörper in gleicher Weise einsetzbar ist wie bei der Ausführung nach Figur 1.

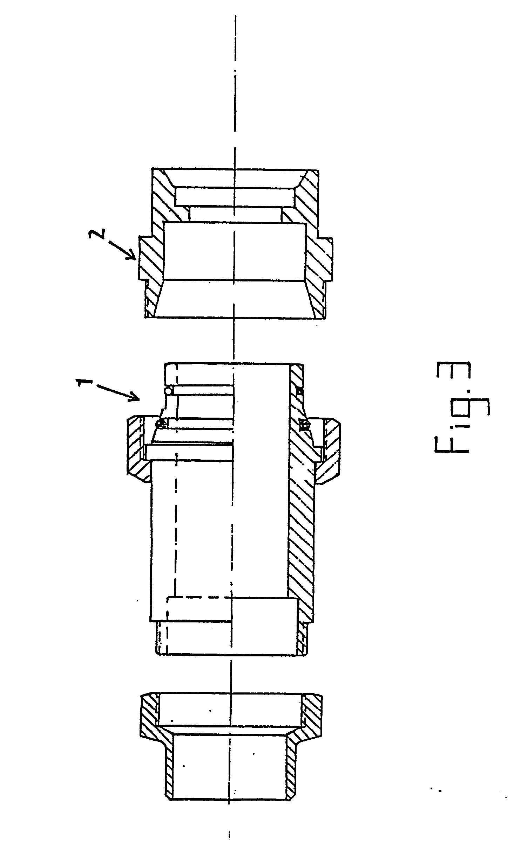

Figur 3 zeigt die Steck-Schraubverbindung in der Ausführung als Rohrkupplung. Hierbei werden das Einsteckteil 1 und das Aufnahmeteil 2 an den Enden nicht weiter dargestellter, miteinander zu verbindender Rohre befestigt. Anstelle des in Figur 3 links dargestellten Anschlußstutzens für ein Rohrende kann auch der linke Teil der Verbindung als Einsteckteil ausgeführt und diesem ein entsprechend gestaltetes Aufnahmeteil 2 zugeordnet werden.

## Patentansprüche

1. Armatur für das Gas- und/oder Flüssigkeitsrohrnetz, welche mit einer oder mehreren Steck-Schraubverbindungen (1, 2) ausgerüstet ist, wobei die Steck-Schraubverbindung (1, 2) aus einem Einsteckteil (1) und einem Aufnahmeteil (2) besteht, das Einsteckteil (1) einen über dessen Grundkörper (3) radial vorragenden, ringförmigen Abschnitt (4) aufweist, auf dem sich eine Überwurfgewindemutter (5) abstützt, und das Aufnahmeteil (2) einen im wesentlichen hohlzylindrischen Grundkörper (10) besitzt, dessen die Einstecköffnung aufweisender erster Abschnitt (11) mit Außengewinde (12) ausgerüstet ist, welches dem Innengewinde (13) der Überwurfgewindemutter (5) zugeordnet ist, wobei ferner sich an den ringförmigen Abschnitt (4) des Einsteckteils (1) in Richtung des offenen Endes der Überwurfgewindemutter (5) ein sich konisch verjüngender Abschnitt (6) anschließt, der eine Ringnut (8) aufweist, in die ein O-Ring (9) eingelegt ist, wobei schließlich die innere Umfangsfläche (14) des ersten Abschnitts (11) des Grundkörpers des Aufnahmeteils (2) sich konisch verjüngend ausgeführt ist und dem konischen Abschnitt (6) des Einsteckteils (1) zugeordnet ist, dadurch gekennzeichnet, daß sich an den ersten sich konisch verjüngenden Abschnitt (11) des Grundkörpers des Aufnahmeteils (2) ein hohlzylindrischer zweiter Abschnitt (15) und an den konisch sich verjüngenden Abschnitt (6) des Einsteckteils (1) sich ein zylindrischer Abschnitt (7) anschließen, welch letzterer eine Ringnut (8) aufweist, in die ein O-Ring (9) eingelegt ist und dessen äußere Umfangsfläche der inneren Umfangsfläche (16) des hohlzylindrischen zweiten Abschnitts (15) des Aufnahmeteils (2) zugeordnet ist.

2. Armatur nach Anspruch 1, dadurch gekennzeichnet, daß das Einsteckteil (1) den Rohranschlußstutzen eines Ventils (17) und das Aufnahmeteil (2) die Anschlußmuffe eines Rohres bilden.

3. Armatur nach Anspruch 1 oder 2, dadurch gekennzeichnet, daß das Aufnahmeteil (2) den Anschlußstutzen eines Ventils (17) und das Einsteckteil (1) die Anschlußmuffe eines Rohres bilden.

4. Armatur nach Anspruch 1 oder einem der vorhergehenden, dadurch gekennzeichnet, daß das Einsteckteil (1) mit dem Absperrorgan eines Ventils (17) ausgerüstet ist und das Aufnahmeteil (2) in das Ventilgehäuse integriert ist.

5. Armatur nach Anspruch 1 oder einem der vorhergehenden, dadurch gekennzeichnet, daß das Einsteckteil (1) und das Aufnahmeteil (2) an den Enden miteinander zu verbindender Rohre befestigt sind.

6. Armatur nach Anspruch 1 oder einem der vorhergehenden, dadurch gekennzeichnet, daß die Überwurfgewindemutter (5) geteilt ausgeführt ist und Flansche aufweist, welche mit einer Schraubverbindung ausgerüstet sind.

## Claims

1. A fitting suitable for a system of pipes carrying gas and/or liquids and equipped with one or a plurality of push-in/screwed connections (1, 2), the push-in/screwed connection (1, 2) consisting of a push-in member (1) and a receiving member (2), the push-in member (1) having, projecting radially beyond its basic body (3), an annular portion (4) on which is braced a screwthreaded cap nut (5), the receiving member (2) having a substantially hollow-cylindrical basic body (10), of which the first portion (11) which comprises the push-in aperture is equipped with an external screwthread (12) associated with the internal screwthread (13) of the screwthreaded cap nut (5), there also being adjacent to the annular portion (4) of the push-in member (1) a portion (6) which tapers conically in the direction of the open end of the screwthreaded cap nut (5) and comprising an annular groove (8) into which an O-ring (9) is fitted, the inner peripheral face (14) of the first portion (11) of the basic body of the receiving member (2) finally being constructed in a conically tapering fashion and being associated with the conical portion (6) of the push-in member (1), characterised in that there are adjacent to the first conically tapering portion (11) of the basic body of the receiving member (2) a hollow cylindrical second portion (15) and, adjacent to the conically tapering portion (6) of the push-in member (1), a cylindrical portion (7) which comprises an annular groove (8) into which an O-ring (9) is fitted, the outer peripheral face being associated with the inner peripheral face (16) of the hollow cylindrical second portion (15) of the receiving member (2).

2. A fitting according to Claim 1, characterised in that the push-in member (1) constitutes the pipe union of a valve (17) while the receiving member (2) forms the connecting sleeve of a pipe.

3. A fitting according to Claim 1 or 2, characterised in that the receiving member (2) forms the connecting union of a valve (17) while the push-in member (1) forms the connecting sleeve of a pipe.

4. A fitting according to Claim 1 or one of the preceding Claims, characterised in that the push-in member (1) equipped with the shut-off means of a valve (17), the receiving member (2) being integrated into the valve body.

5. A fitting according to Claim 1 or one of the preceding Claims, characterised in that the push-in member (1) and the receiving member (2) are fixed on the ends of pipes which are to be connected to each other.

6. A fitting according to Claim 1 or one of the preceding Claims, characterised in that the screwthreaded cap nut (5) is of divided contruction and has flanges which are equipped with a screwed connection.

**Revendications**

1. Raccord pour le réseau de tuyauterie de gaz et/ou de liquide équipé d'un ou plusieurs raccords à vis emboîtés (1, 2), le raccord à vis emboîté (1, 2) étant composé d'une pièce femelle (1) et d'une pièce mâle (2), la pièce femelle (1) présentant une partie annulaire (4) qui fait saillie radialement par rapport au corps de base (3) de ladite partie femelle et sur laquelle prend appui un écrou d'accouplement taraudé (5), et la pièce mâle (2) possédant un corps de base (10) pour l'essentiel en forme de cylindre creux dont la première partie (11) présentant l'ouverture d'emboîtement est munie d'un filetage (12) qui est associé au taraudage (13) de l'écrou d'accouplement taraudé (5), la partie annulaire (4) de la pièce femelle (1) se prolongeant en outre en direction de l'extrémité ouverte de l'écrou d'accouplement taraudé (5) par une partie (6) se rétrécissant en cône qui présente une encoche annulaire (8) dans laquelle est placé un joint torique (9), la surface périphérique intérieure (14) de la première partie (11) du corps de base de la pièce mâle (2) se rétrécissant enfin en cône et étant associée à la partie conique (6) de la pièce femelle (1), caractérisé en ce que la prmière partie (11) se rétrécissant en cône du corps de base de la pièce femelle (2) se prolonge par une deuxième partie (15) en forme de cylindre creux et la partie (6) se rétrécissant en cône, de la pièce femelle (1) par une partie cylindrique (7) qui présente une gorge annulaire (8) dans laquelle est placé un joint torique (9) et dont la surface périphérique extérieure est associée à la surface périphérique intérieure (16) de la deuxième partie (15) en forme de cylindre creux de la pièce mâle (2).

2. Raccord selon la revendication 1, caractérisé en ce que la pièce femelle (1) forme la tubulure de raccordement de tube d'un clapet (17) et la pièce mâle (2) le manchon de raccordement d'un tube.

3. Raccord selon la revendication 1 ou 2, caractérisé en ce que la pièce mâle (2) forme la tubulure de raccordement d'un clapet (17) et la pièce femelle (1) le manchon de raccordement d'un tube.

4. Raccord selon la revendication 1 ou l'une quelconque des revendications précédentes, caractérisé en ce que la pièce femelle (1) est équipée de l'organe d'arrêt d'un clapet (17) et la pièce mâle (2) est intégrée dans le boîtier de clapet.

5. Raccord selon la revendication 1 ou l'une quelconque des revendications précédentes, caractérisé en ce que la pièce femelle (1) et la pièce mâle (2) sont fixées aux extrémités de tubes à raccorder l'un avec l'autre.

6. Raccord selon la revendication 1 ou l'une quelconque des revendications précédentes, caractérisé en ce que l'écrou de raccordement taraudé (5) est divisé et présente des brides qui sont équipées d'un raccord à vis.

Fig. 1

Fig.2

EP 0 166 203 B1

Fig.3